# EUROPÄISCHE PATENTSCHRIFT

(11) **EP 4 271 925 B1**
(45) Veröffentlichungstag und Bekanntmachung des Hinweises auf die Patenterteilung: **19.02.2025**
(21) Anmeldenummer: 21854803.0
(22) Anmeldetag: 30.12.2021
(51) Int. Cl.: F16L 5/10

(54) **WAND UND ROHRDURCHFÜHRUNG FÜR EIN ROHR AN DIESER WAND**
WALL AND PIPE FEEDTHROUGH FOR A PIPE ON SAID WALL
MUR ET TRAVERSÉE DE MUR POUR TUBE SITUÉE SUR CE MUR

(30) Priorität: 30.12.2020 AT 603812020
(43) Veröffentlichungstag der Anmeldung: 08.11.2023
(73) Patentinhaber: Schörflinger, Alexander, 4070 Fraham (AT); Kirchhofer, Thomas, 4322 Windhaag bei Perg (AT)
(72) Erfinder: SCHÖRFLINGER, Alexander, 4070 Fraham (AT); KIRCHHOFER, Thomas, 4322 Windhaag bei Perg (AT)
(74) Vertreter: Jell, Friedrich
(86) Internationale Anmeldenummer: PCT/AT2021/060497
(87) Internationale Veröffentlichungsnummer: WO 2022/140815

(56) Entgegenhaltungen:
- EP-B1- 0 300 963
- WO-A1-2019/211467
- DE-A1- 19 544 957
- DE-U1- 202018 001 460

## Beschreibung

### Technisches Gebiet

Die Erfindung betrifft eine Wand und eine Rohrdurchführung für ein Rohr an einer Wand, insbesondere Außenwand, mit einem Kunststoffkörper, welcher Kunststoffkörper einen Rohrstutzen zur Durchführung des Rohrs sowie einen umlaufenden Flansch am Rohrstutzen aufweist, und mit einer flexiblen Manschette, die mit dem Kunststoffkörper fest verbundenen ist und von diesem seitlich weg steht.

### Stand der Technik

Um den Rohrübergang in eine Wand oder in den Boden gegenüber Flüssigkeiten und Feuchtigkeit abzudichten, ist eine Rohrdurchführung bekannt (EP0300963B1), die das Rohr mit einem Rohrstutzen flüssigkeitsdicht umschließt und zudem mit einer flüssigkeitsdichten Folien-Manschette an Wand und/oder Boden flüssigkeitsdicht anschließt. Derartige Rohrdurchführungen dienen dem Ablauf und werden an Wänden nicht eingesetzt, da diese witterungsbedingten Widrigkeiten nicht standhalten.

Aus der DE202018001460U1 ist ein Fassadenverbund mit einem Durchbruch bekannt, durch den ein Lastaufnahmeelement in einer Tragwand verankert. Bei der Herstellung des Fassadenverbunds wird ein zylindrischer Hohlkörper aus einem Armierungsgewebe in den Durchbruch bis zu einer Faltkante eingesetzt, an dieser Faltkante umgefaltet und verklebt. Danach wird ein Rohrstutzen am Durchbruch eingesetzt und mit dem zylindrischen Hohlkörper verklebt. Die Herstellung eines derartigen Fassadenverbunds ist vergleichsweise aufwendig.

Die DE19544957A1 und die WO2019/211467A1 offenbaren Manschetten, die auf ein Rohr aufgeschoben und an einer Wand befestigt werden können.

### Darstellung der Erfindung

Die Erfindung hat sich daher die Aufgabe gestellt, eine Rohrdurchführung zu schaffen, die an einer Außenwand standfest eingesetzt werden kann.

Die Erfindung löst die gestellte Aufgabe durch die Merkmale des Anspruchs 1.

Wird die Manschette von einem Armierungsgewebe in Gitterform ausgebildet, kann die Rohrdurchführung auch standfest an einer Außenwand vorgesehen werden, da durch die Flexibilität und der gleichzeitig hohen Zugfestigkeit des Armierungsgewebes eine besonders standfeste Verbindung mit der Außenwand erreichbar ist. Insbesondere kann damit im Vergleich mit einer Folien-Manschette auch die Dehnung der Manschette erfindungsgemäß gering bleiben, was Risse in der Außenwand vermeidet - und damit die Gefahr eines Eintretens von Feuchtigkeit und Flüssigkeiten in die Wand reduziert. Eine standfeste Rohrdurchführung ist damit geschaffen, welche insbesondere auch widrigen Umwelteinflüssen trotzen kann, wie diese an einer Außenwand herrschen.

Als Armierungsgewebe in Gitterform ist ein Glasfasergittergewebe, Polyestergittergewebe etc. denkbar. Das Armierungsgewebe kann mit einer Kunststoffappretur beschichtet sein. Der Kunststoffkörper ist vorzugsweise aus einem PVC Material, wobei auch ein PP Material denkbar ist.

Vorzugsweise kann der Rohrstutzen eine Innendichtung, insbesondere eine Lippendichtung, aufweisen, um zusätzlich einen standfesten, flüssigkeitsdichten Abschluss mit dem durchzuführenden Rohr zu ermöglichen.

Indem die Längsachse des Rohrstutzens zur Querachse durch den Flansch in einem Winkel α < 90 Grad geneigt ist, kann die Montage des Rohrstutzens erleichtert werden - dies insbesondere, weil Rohre für einen Wasserablauf in der Regel die Außenwand geneigt verlaufend durchstoßen. Es bedarf daher keines Verkippens des Rohrstutzens gegenüber der meist senkrecht verlaufenden Außenwand, um das Rohr geneigt durchzuführen bzw. in der Montagelage aufnehmen zu können.

Insbesondere, wenn dieser Winkel α im Bereich von 75 bis kleiner 90 Grad liegt, kann im Wesentlich jede genormte Neigung der verlegten Rohre vom Rohrstutzen aufgenommen werden. Als besonders geeignet können sich diesbezüglich 87 Grad erweisen.

Die Konstruktion der Rohrdurchführung kann sich weiter vereinfachen, wenn das Armierungsgewebe mit dem Flansch verschweißt ist. Vorzugsweise ist das Armierungsgewebe mit dem Flansch an dessen Flanschfront verschweißt.

Die Schweißverbindung kann in der Festigkeit weiter verbessert werden, der Flansch einen Verbindungsbereich mit dem verschweißten Armierungsgewebe aufweist, wobei in diesem Verbindungsbereich die Oberfläche eine im Vergleich mit einer daran anschließenden Oberfläche der Rohrdurchführung, insbesondere des Flansches, erhöhte mittlere Rauigkeit aufweist. Solche eine Oberfläche im Verbindungsbereich kann durch Aufrauen beispielsweise mit Quarzsand etc. geschaffen werden.

Weiter ist vorstellbar, dass das Armierungsgewebe in den Kunststoffkörper eingebettet befestigt ist. Dies kann zudem den Verbund zwischen Armierungsgewebe und Kunststoffkörper besonders stärken, um dadurch eine erhöhte Standfestigkeit selbst äußersten witterungsbedingten Widrigkeiten sicherstellen zu können.

Die Montage und insbesondere das Einbetten der Rohrdurchführung in eine Beschichtung der Wand kann weiter erleichtert werden, wenn auf der Frontseite der Rohrdurchführung ein Rohrende des Rohrstutzens dem Flansch überstehen und damit eine Anputzkante ausbildet. Zudem ist durch die Anputzkante die Lage der Rohrdurchführung an der Wand auf einfache Weise zu überprüfen - was in folglich auch die Handhabung der Rohrdurchführung erleichtern kann.

Indem das Armierungsgewebe im Anschlussbereich des Rohrendes mit dem Flansch in den Kunststoffkörper eingebettet befestigt ist, kann die Rohrdurchführung bis zur Anputzkante hin standfest in einer Wandbeschichtung eingebettet werden.

Vorzugsweise verläuft das Armierungsgewebe über den Flansch auf der Frontseite der Rohrdurchführung, um ein Einbetten der Rohrdurchführung in einer Beschichtung der Wand erleichtern kann.

Die Handhabbarkeit der Rohrdurchführung ist weiter zu erleichtern, wenn der Flansch eine Flanschdicke von 2 bis 10 mm (Millimeter) aufweist. Dies umso mehr, wenn der Flansch eine Flanschbreite von 25 bis 35 mm aufweist. Vorzugsweise beträgt die Flanschbreite 30 mm, was beispielsweise für eine ausreichende Anbindungsfläche für das Armierungsgewebe sorgen kann.

Vorteilhaft hinsichtlich der Handhabung beispielsweise bei der Montage kann weiter sein, wenn der Rohrstutzen eine Länge bis zu 50 mm aufweist. Als ausreichend für eine vielseitige Anwendbarkeit der Rohrdurchführung kann sich bereits herausstellen, wenn der Rohrstutzen einen Innendurchmesser aufweist, der zur Durchführung eines Rohrs mit einer Nennweite von zumindest DN 50, insbesondere zumindest DN 100, ausgebildeten ist.

Die Rohrdurchführung lässt sich beispielsweise handhabungsfreundlicher an einer Außenwand platzieren, wenn Flanschfront und Anputzkante normal aufeinander stehen.

Als ausreichend zum Anputzen der Rohrdurchführung kann sich herausstellen, wenn das Rohrende dem Flansch im Bereich von 4 bis 9 mm (Millimeter). Beispielsweise 7 mm können zu einem Optimum in der Handhabung führen.

Vorzugsweise ist der Überstand des Rohrendes in Millimeter zusammen mit der Flanschdicke in Millimeter im Bereich von 5 bis 11 mm, insbesondere entweder 6 mm oder 9 mm, was eine einfache Handhabung der Rohrdurchführung beim Verputzen verschiedenster Beschichtungsmassen sicherstellen kann.

Die Rohrdurchführung findet bevorzugt an einer Wand, insbesondere Außenwand, mit einer äußeren Beschichtungsmasse Verwendung. Insbesondere ist dabei das Armierungsgewebe der Rohrdurchführung in der Beschichtungsmasse, welche insbesondere eine Putzmasse und/oder Spachtelmasse ist, eingebettet.

Zudem kann die Wand ein Rohr zur Entwässerung eines Dachs, insbesondere Flachdachs, aufweisen. Erfindungsgemäß wird bei dem die Rohrdurchführung durchdringenden Rohr ein besonders feuchtigkeits- und flüssigkeitsdichter Abschluss der Außenwand im Bereich der Rohröffnung sichergestellt.

### Kurze Beschreibung der Zeichnungen

In den Figuren ist der Erfindungsgegenstand anhand eines Ausführungsbeispiels näher dargestellt. Es zeigen
Fig. 1 eine Schnittansicht auf eine Rohrdurchführung,
Fig. 2 eine Draufsicht auf die Rohrdurchführung nach Fig. 1 und
Fig. 3 eine aufgerissene Seitenansicht auf eine Wand mit der Rohrdurchführung nach den Figuren 1 und 2.

### Wege zur Ausführung der Erfindung

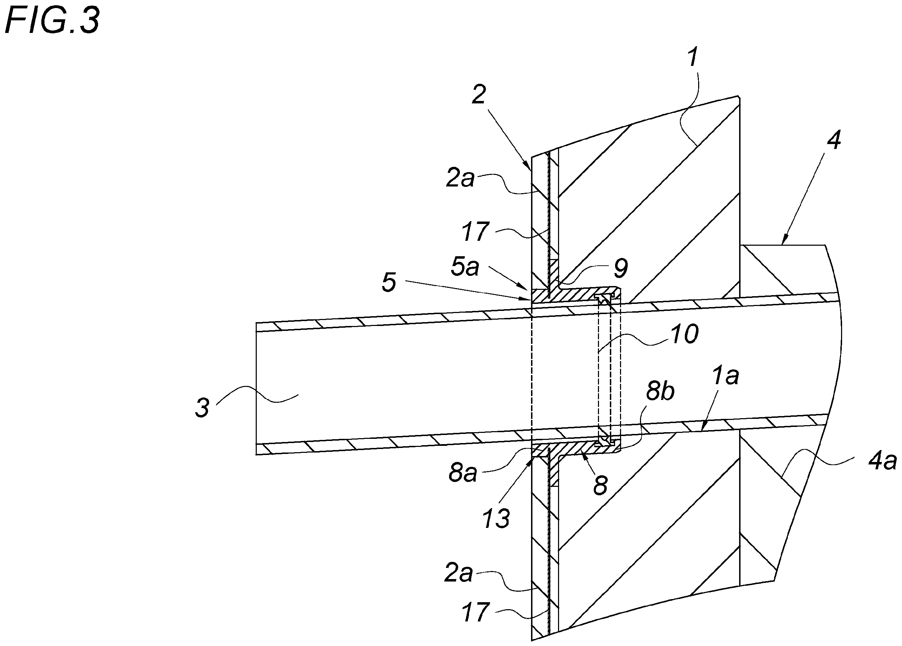

Nach Fig. 3 wird eine als Außenwand 1 ausgebildete Wand eines nicht näher dargestellten Gebäudes gezeigt, an der eine äußere Beschichtungsmasse 2 vorgesehen ist. Durch diese Außenwand 1 führt ein Rohr 3 zur Entwässerung eines Flachdachs 4, das eine Wärmedämmung 4a aufweist.

Das Rohr 3 steht der Außenwand 1 auf der Außenseite des nicht näher dargestellten Gebäudes vor. Um einen Spalt zwischen Außenwand 1 und Rohr 3 zu vermeiden, ist die Rohrdurchführung 5 vorgesehen, und zwar mit seiner Frontseite 5a der Außenseite der Außenwand 1 zugewandt. Die Rohrdurchführung 5 dichtet die Außenwand 1 gegenüber einem Eindringen von Feuchtigkeit und/oder Wasser ab.

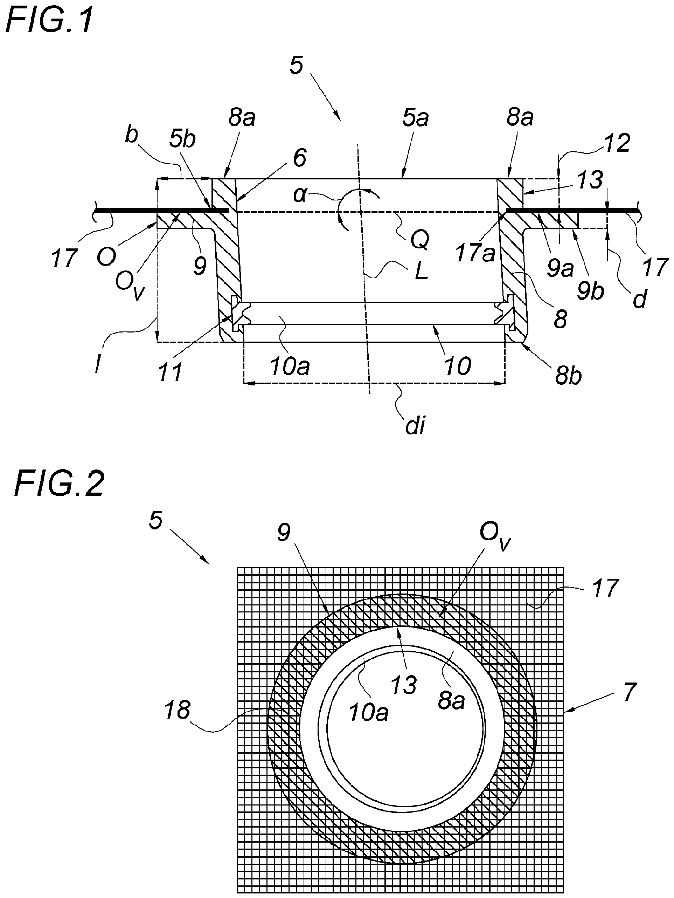

Diese in den Figuren 1 und 2 näher dargestellte Rohrdurchführung 5 weist einen Kunststoffkörper 6 aus PVC und eine Manschette 7 auf. Der Kunststoffkörper 6 zeigt einen Rohrstutzen 8 und einen den Rohrstutzen 8 umlaufenden Flansch 9. Durch den Rohrstutzen 8 führt das Rohr 3, wie in Fig. 1 zu erkennen ist. Die Manschette 7 ist mit dem Kunststoffkörper 6 fest verbunden und steht von diesem Kunststoffkörper 6 seitlich weg.

Die Manschette 7 ist flexibel. Dies in dem erfindungsgemäß die Manschette 7 von einem Armierungsgewebe 17 in Gitterform, nämlich Glasfasergittergewebe, ausgebildet wird, wie dies in der Fig. 2 im Detail erkannt werden kann. Dadurch kann die Rohrdurchführung 5 standfest in der Beschichtungsmasse 2, nämlich einer Putzmasse 2a, der Außenwand 1 eingebettet werden. Witterungsbedingte Widrigkeiten gefährden sohin nicht den feuchtigkeits- und flüssigkeitsdichten Abschluss zwischen Rohrdurchführung 5 und Außenwand 1.

Für einen standfesten und dichten Abschluss zwischen Rohr 3 und Kunststoffkörper 6 sorgt eine Innendichtung 10. Diese Innendichtung 10 ist als Lippendichtung 10a ausgeführt, die formschlüssig in einer innenseitigen Ausnehmung 11 des Rohrstutzens 8 eingesetzt und befindet sich bevorzugt im Bereich des zweiten Rohrendes 8b.

Das zweite Rohrende 8b steht dem Flanschrücken 9b vor, und zwar um das mehrfache des Überstands 12 des Rohrendes 8a.

Das nach Norm um 3 Grad geneigt durch die Außenwand 1 verlaufende Rohr 3 wird von der Rohrdurchführung 5 koaxial verkanntungsfrei aufgenommen. Hierzu ist die Längsachse L des Rohrstutzens 8 zur Querachse Q durch den Flansch 9 in einem Winkel α < 90 Grad geneigt, und zwar um exakt 87 Grad. Der Winkel α liegt daher im Bereich von 75 bis kleiner 90 Grad.

Wie in der Fig. 1 zu erkennen, ist das Armierungsgewebe 17 im Anschlussbereich 5b des Rohrendes 8a des Rohrstutzens 8 mit dem Flansch 9 in den Kunststoffkörper 6 eingebettet befestigt. Hierzu ist ein Ende 17a des Armierungsgewebes 17 im innerhalb des Kunststoffkörpers 6 vorgesehen.

Zusätzlich oder auch alternativ dazu ist das Armierungsgewebe 17 mit dem Flansch 9 verschweißt, wie das in Fig. 2 schraffiert über das Armierungsgewebe 17 eingezeichnet zu erkennen ist. Das Verschweißen kann beispielsweise mit einem Anschmelzen des Flansches 9 unter eventueller Zugabe eines Zusatzwerkstoffs, beispielsweise Polymers, vorzugsweise aus dem der Kunststoffkörper besteht, erfolgen. Beispielsweise kann sich hierzu ein Thermoschweißen eignen.

Beim Verschweißen kann auch dienlich sein, wenn das Armierungsgewebe 17 mit einer Kunststoffappretur beschichtet ist. Vorzugsweise sind diese Kunststoffappretur und der Kunststoffkörper 6 aus dem gleichen Polymer, was das Verschweißen erleichtert.

Der Flansch 9 weist hierzu an der Frontseite 5a der Rohrdurchführung 5 bzw. damit an dessen Flanschfront 5a einen Verbindungsbereich 18 mit dem verschweißten Armierungsgewebe 17 auf. Dieser Verbindungsbereich 18 erstreckt sich über die gesamte Flanschfront 9a, wobei aber auch ein Teilebereich davon vorstellbar ist. Die Oberfläche Ov des Flansches 9 in diesem Verbindungsbereich 18 ist aufgeraut, was eine standfeste stoffschlüssige Verbindung mit dem Armierungsgewebe 17 sicherstellt. Erkennbar ist diese Aufrauung, was beispielsweise durch Sand/Kugelstrahlen, Perforieren etc. durchgeführt werden kann, dass in diesem Verbindungsbereich 18 die Oberfläche Ov rauer ist und damit im Vergleich mit einer daran anschließenden Oberfläche O des Flansches 9 erhöhte mittlere Rauigkeit Ra aufweist.

Zudem ist in der Fig. 1 zu erkennen, dass der Rohrstutzen 8 dem Flansch 9 auf der Frontseite 5a der Rohrdurchführung 5 übersteht - und zwar mit einem Rohrende 8a von zwei Rohrenden 8a, 8b. Dieses Rohrende 8a bildet durch diesen Überstand 12 eine Anputzkante 13 aus, wie in der Fig. 3 zu erkennen - die Putzmasse 2a schließt bündig an das Rohrende 8a an. Das Rohrende 8a befindet sich sohin an der Frontseite 5a der Rohrdurchführung 5. Das Rohrende 8a ist an der Wand sichtbar.

Die Flanschfront 9a und die Anputzkante 13 stehen normal aufeinander, was für eine einfache Verarbeitung der Rohrdurchführung 5 an der Außenwand 1 sorgt.

Der Überstand 12 der Anputzkante 13 ist vorzugsweise 9 mm oder 6 mm weniger der Flanschdicke d in Millimeter.

Zudem läuft das Armierungsgewebe 17 über den Flansch 9 an der Frontseite 5a der Rohrdurchführung 5, womit auch im Bereich des Flansches 9 das Anhaften einer Beschichtungsmasse 2 sichergestellt ist.

Vorzugsweise weist der Flansch 9 eine Flanschdicke von 2 bis 10 mm und eine Flanschbreite b von 30 mm auf. Der Rohrstutzen 8 weist eine Länge l von 37 mm auf, wobei das Rohrende 8a des Rohrstutzens 8 dem Flansch 9 sieben Millimeter übersteht. Mit einer Flanschdicke von 2 mm steht daher das zweite Rohrende 8b des Rohrstutzens 8 28 mm dem Flanschrücken 9b vor.

Der Rohrstutzen 8 ist mit dessen Innendurchmesser di für ein Rohr 3 mit einer Nennweite von DN 100 ausgelegt.

## Patentansprüche

1. Rohrdurchführung zum Einsetzen an einer Wand, für ein Rohr (3) an dieser Wand, insbesondere Außenwand (1), mit einem Kunststoffkörper (6), welcher Kunststoffkörper (6) einen Rohrstutzen (8) zur Durchführung des Rohrs (3) sowie einen umlaufenden Flansch (9) am Rohrstutzen (8) aufweist, und mit einer flexiblen Manschette (7), die mit dem Kunststoffkörper (6) fest verbundenen ist und von diesem seitlich weg steht, **dadurch gekennzeichnet, dass** die Manschette (7) von einem Armierungsgewebe (17) in Gitterform ausgebildet wird.

2. Rohrdurchführung nach Anspruch 1, **dadurch gekennzeichnet, dass** der Rohrstutzen (8) eine Innendichtung (10), insbesondere eine Lippendichtung (10a), aufweist.

3. Rohrdurchführung nach Anspruch 1 oder 2, **dadurch gekennzeichnet, dass** die Längsachse (L) des Rohrstutzens (8) zur Querachse (Q) durch den Flansch (9) in einem Winkel (α) < 90 Grad geneigt ist.

4. Rohrdurchführung nach Anspruch 3, **dadurch gekennzeichnet, dass** der Winkel (α) im Bereich von 75 bis kleiner 90 Grad liegt, insbesondere 87 Grad beträgt.

5. Rohrdurchführung nach einem der Ansprüche 1 bis 4, **dadurch gekennzeichnet, dass** das Armierungsgewebe (17) mit dem Flansch (9), insbesondere an dessen Flanschfront (9a), verschweißt ist.

6. Rohrdurchführung nach Anspruch 5, **dadurch gekennzeichnet, dass** der Flansch (9) einen Verbindungsbereich (18) mit dem verschweißten Armierungsgewebe (17) aufweist, wobei in diesem Verbindungsbereich (18) die Oberfläche (Ov) eine im Vergleich mit einer daran anschließenden Oberfläche (O) der Rohrdurchführung (5), insbesondere des Flansches (9), erhöhte mittlere Rauigkeit (Ra) aufweist.

7. Rohrdurchführung nach einem der Ansprüche 1 bis 6, **dadurch gekennzeichnet, dass** das Armierungsgewebe (17) in den Kunststoffkörper (6) eingebettet befestigt ist.

8. Rohrdurchführung nach einem der Ansprüche 1 bis 7, **dadurch gekennzeichnet, dass** auf der Frontseite (5a) der Rohrdurchführung (5) ein Rohrende (8a) des Rohrstutzens (8) dem Flansch (9) übersteht und damit eine Anputzkante (13) ausbildet.

9. Rohrdurchführung nach Anspruch 8, **dadurch gekennzeichnet, dass** das Armierungsgewebe (17) im Anschlussbereich (5b) des Rohrendes (8a) mit dem Flansch (9) in den Kunststoffkörper (6) eingebettet befestigt ist.

10. Rohrdurchführung nach Anspruch 8 oder 9, **dadurch gekennzeichnet, dass** Flanschfront (5a) und Anputzkante (13) normal aufeinander stehen.

11. Rohrdurchführung nach Anspruch 8, 9 oder 10, **dadurch gekennzeichnet, dass** das Rohrende (8a) dem Flansch (9) im Bereich von 4 bis 9 mm, insbesondere 7 mm, übersteht.

12. Rohrdurchführung nach Anspruch 8, 9, 10 oder 11, **dadurch gekennzeichnet, dass** der Überstand (12) des Rohrendes (8a) in Millimeter zusammen mit der Flanschdicke (d) in Millimeter im Bereich von 5 bis 11 mm, insbesondere entweder 6 mm oder 9 mm, ist.

13. Rohrdurchführung nach einem der Ansprüche 1 bis 12, **dadurch gekennzeichnet, dass** das Armierungsgewebe (17) über den Flansch (9) auf der Frontseite (5a) der Rohrdurchführung (5) verläuft.

14. Rohrdurchführung nach einem der Ansprüche 1 bis 13, **dadurch gekennzeichnet, dass** der Flansch (9) eine Flanschdicke (d) von 2 bis 10 mm, insbesondere 2 mm, und/oder eine Flanschbreite (b) von 25 bis 35 mm, insbesondere 30 mm, aufweist.

15. Rohrdurchführung nach einem der Ansprüche 1 bis 14, **dadurch gekennzeichnet, dass** der Rohrstutzen (8) eine Länge (l) bis zu 50 mm, insbesondere 37mm, und/oder einen Innendurchmesser (di) aufweist, der zur Durchführung eines Rohrs mit einer Nennweite von zumindest DN 50, insbesondere DN 100, ausgebildeten ist.

16. Wand, insbesondere Außenwand (1), mit einer äußeren Beschichtungsmasse (2), insbesondere Putzmasse (2a) und/oder Spachtelmasse, und mit einer Rohrdurchführung (5) nach einem der Ansprüche 1 bis 15, wobei das Armierungsgewebe (17) der Rohrdurchführung (5) in der Beschichtungsmasse (2) eingebettet ist.

17. Wand nach Anspruch 16, **dadurch gekennzeichnet, dass** die Wand ein Rohr (3) zur Entwässerung eines Dachs, insbesondere Flachdachs (4), aufweist, und dass das Rohr (3) die Rohrdurchführung (5) durchdringt.

## Claims

1. Pipe feedthrough for insertion in a wall, for a pipe (3) on this wall, more particularly an outer wall (1), having a plastic body (6), which plastic body (6) has a pipe socket (8) for the pipe (3) to pass through and also a peripheral flange (9) on the pipe socket (8), and having a flexible sleeve (7) which is firmly connected to the plastic body (6) and projects laterally away therefrom, **characterized in that** the sleeve (7) is formed in the shape of a grid by a reinforcing fabric (17).

2. Pipe feedthrough according to claim 1, **characterized in that** the pipe socket (8) has an internal seal (10), more particularly a lip seal (10a).

3. Pipe feedthrough according to claim 1 or 2, **characterized in that** the longitudinal axis (L) of the pipe socket (8) is inclined at an angle (α) <90 degrees to the transverse axis (Q) through the flange (9).

4. Pipe feedthrough according to claim 3, **characterized in that** the angle (α) is in the range from 75 to less than 90 degrees, more particularly 87 degrees.

5. Pipe feedthrough according to one of claims 1 to 4, **characterized in that** the reinforcing fabric (17) is welded to the flange (9), more particularly on the flange front (9a) thereof.

6. Pipe feedthrough according to claim 5, **characterized in that** the flange (9) has a connecting region (18) with the welded reinforcing fabric (17), wherein the surface (Ov) in this connecting region (18) has a higher mean roughness (Ra) in comparison with an adjoining surface (O) of the pipe feedthrough (5), more particularly of the flange (9).

7. Pipe feedthrough according to one of claims 1 to 6, **characterized in that** the reinforcing fabric (17) is embedded in the plastic body (6).

8. Pipe feedthrough according to one of claims 1 to 7, **characterized in that**, on the front side (5a) of the pipe feedthrough (5), one pipe end (8a) of the pipe socket (8) projects beyond the flange (9) and thus forms a plastering edge (13).

9. Pipe feedthrough according to claim 8, **characterized in that** the reinforcing fabric (17) is attached in the connecting region (5b) of the pipe end (8a) with the flange (9) embedded in the plastic body (6).

10. Pipe feedthrough according to claim 8 or 9, **characterized in that** the flange front (5a) and plastering edge (13) are disposed normally to one another.

11. Pipe feedthrough according to claim 8, 9 or 10, **characterized in that** the pipe end (8a) projects beyond the flange (9) in the range from 4 to 9 mm, more particularly 7 mm.

12. Pipe feedthrough according to claim 8, 9, 10 or 11, **characterized in that** the projection (12) of the pipe end (8a) in millimeters together with the flange thickness (d) in millimeters is in the range from 5 to 11 mm, more particularly either 6 mm or 9 mm.

13. Pipe feedthrough according to one of claims 1 to 12, **characterized in that** the reinforcing fabric (17) extends over the flange (9) on the front side (5a) of the pipe feedthrough (5).

14. Pipe feedthrough according to one of claims 1 to 13, **characterized in that** the flange (9) has a flange thickness (d) of 2 to 10 mm, more particularly 2 mm, and/or a flange width (b) of 25 to 35 mm, more particularly 30 mm.

15. Pipe feedthrough according to one of claims 1 to 14, **characterized in that** the pipe socket (8) has a length (l) of up to 50 mm, more particularly 37 mm, and/or an internal diameter (di) which is designed for the passage of a pipe having a nominal width of at least DN 50, more particularly DN 100.

16. Wall, more particularly an external wall (1), having an external coating composition (2), more particularly a plaster composition (2a) and/or filler composition, and having a pipe feedthrough (5) according to one of claims 1 to 15, wherein the reinforcing fabric (17) of the pipe feedthrough (5) is embedded in the coating composition (2).

17. Wall according to claim 16, **characterized in that** the wall has a pipe (3) for draining a roof, more particularly a flat roof (4), and **in that** the pipe (3) passes through the pipe feedthrough (5).

## Revendications

1. Traversée de mur pour tube à insérer sur un mur, pour un tube (3) sur ce mur, en particulier un mur extérieur (1), avec un corps en matière plastique (6), lequel corps en matière plastique (6) présente une tubulure (8) pour la traversée de mur du tube (3) ainsi qu'une collerette périphérique (9) sur la tubulure (8), et avec une manchette flexible (7) qui est reliée de manière fixe au corps en matière plastique (6) et s'éloigne latéralement de celui-ci, **caractérisée en ce que** la manchette (7) est constituée d'une toile d'armature (17) sous forme de grille.

2. Traversée de mur pour tube selon la revendication 1, **caractérisée en ce que** la tubulure (8) présente un joint intérieur (10), en particulier un joint à lèvres (10a).

3. Traversée de mur pour tube selon la revendication 1 ou 2, **caractérisée en ce que** l'axe longitudinal (L) de la tubulure (8) est incliné par rapport à l'axe transversal (Q) à travers la collerette (9) selon un angle (α) < 90 degrés.

4. Traversée de mur pour tube selon la revendication 3, **caractérisée en ce que** l'angle (α) se situe dans la plage de 75 à moins de 90 degrés, en particulier est de 87 degrés.

5. Traversée de mur pour tube selon l'une des revendications 1 à 4, **caractérisée en ce que** la toile d'armature (17) est soudée à la collerette (9), en particulier sur sa face avant de collerette (9a).

6. Traversée de mur pour tube selon la revendication 5, **caractérisée en ce que** la collerette (9) présente une zone de liaison (18) avec la toile d'armature soudée (17), la surface (Ov) dans cette zone de liaison (18) présentant une rugosité moyenne (Ra) accrue par rapport à une surface (O) de la traversée de mur pour tube (5), en particulier de la collerette (9), qui s'y raccorde.

7. Traversée de mur pour tube selon l'une des revendications 1 à 6, **caractérisée en ce que** la toile d'armature (17) est fixée de manière encastrée dans le corps en matière plastique (6).

8. Traversée de mur pour tube selon l'une des revendications 1 à 7, **caractérisée en ce que**, sur la face avant (5a) de la traversée de mur pour tube (5), une extrémité de tube (8a) de la tubulure (8) dépasse de la collerette (9) et forme ainsi un bord de finition (13).

9. Traversée de mur pour tube selon la revendication 8, **caractérisée en ce que** la toile d'armature (17) est fixée dans la zone de raccordement (5b) de l'extrémité de tube (8a) avec la collerette (9) encastrée dans le corps en matière plastique (6).

10. Traversée de mur pour tube selon la revendication 8 ou 9, **caractérisée en ce que** la face avant de collerette (5a) et le bord de finition (13) sont perpendiculaires l'un à l'autre.

11. Traversée de mur pour tube selon la revendication 8, 9 ou 10, **caractérisée en ce que** l'extrémité de tube (8a) dépasse de la collerette (9) dans la plage de 4 à 9 mm, en particulier de 7 mm.

12. Traversée de mur pour tube selon la revendication 8, 9, 10 ou 11, **caractérisée en ce que** la saillie (12) de l'extrémité de tube (8a) en millimètres, conjointement avec l'épaisseur de collerette (d) en millimètres, est dans la plage de 5 à 11 mm, en particulier soit 6 mm soit 9 mm.

13. Traversée de mur pour tube selon l'une des revendications 1 à 12, **caractérisée en ce que** la toile d'armature (17) s'étend sur la collerette (9) sur la face avant (5a) de la traversée de mur pour tube (5).

14. Traversée de mur pour tube selon l'une des revendications 1 à 13, **caractérisée en ce que** la collerette (9) présente une épaisseur de collerette (d) de 2 à 10 mm, en particulier de 2 mm, et/ou une largeur de collerette (b) de 25 à 35 mm, en particulier de 30 mm.

15. Traversée de mur pour tube selon l'une des revendications 1 à 14, **caractérisée en ce que** la tubulure (8) présente une longueur (l) allant jusqu'à 50 mm, en particulier 37 mm, et/ou un diamètre intérieur (di) qui est conçu pour la traversée d'un tube d'un diamètre nominal d'au moins DN 50, en particulier DN 100.

16. Mur, en particulier mur extérieur (1), avec une masse de revêtement extérieure (2), en particulier un enduit (2a) et/ou un mastic, et avec une traversée de mur pour tube (5) selon l'une des revendications 1 à 15, la toile d'armature (17) de la traversée de mur pour tube (5) étant encastrée dans la masse de revêtement (2).

17. Mur selon la revendication 16, **caractérisée en ce que** le mur présente un tube (3) pour le drainage d'un toit, en particulier d'un toit plat (4), et **en ce que** le tube (3) traverse la traversée de mur pour tube (5).
